Europäisches Patentamt

(19) European Patent Office

Office européen des brevets

(11) Publication number : **0 537 113 A1**

## (12) EUROPEAN PATENT APPLICATION

(21) Application number : **92810753.1**

(22) Date of filing : **06.10.92**

(51) Int. Cl.⁵ : **A23L 1/30,** A23L 2/38,
A23D 7/00

(30) Priority : **10.10.91 GB 9121468
16.03.92 GB 9205692**

(43) Date of publication of application :
**14.04.93 Bulletin 93/15**

(84) Designated Contracting States :
**AT BE CH DE DK ES FR GB GR IE IT LI LU NL
PT SE**

(71) Applicant : **SANDOZ NUTRITION Ltd.
Monbijoustrasse 118
CH-4002 Berne (CH)**

(72) Inventor : **Brouns, Fredericus Johannes
Petrus Henricus
Scheibenstrasse 19
CH-3014 Berne (CH)**
Inventor : **Ernstberger, Wolfgang
Weidenweg 7
CH-3177 Laupen (CH)**
Inventor : **Saris, Wilhelmus Hermanus Marinus
Houthemerweg 13
NL-6231 KS Meerssen (NL)**

(74) Representative : **Smolders, Walter et al
c/o Sandoz Technology Ltd., Lichtstrasse 35
CH-4002 Basel (CH)**

(54) **Energy supplementary food.**

㊌ Energy supplements are described supplying energy primarily in the form of carbohydrates and medium chain triglycerides (MCT), whereby the weigh ratio of carbohydrate : MCT is in the range of from 50 :0.1 to 1 :5. The energy supplements are preferably substantially free of proteins.

EP 0 537 113 A1

This invention relates to a method and composition for treating or preventing energy deficits in people involved in heavy physical work or exercise.

It is generally known that heavy physical work or exercise depletes the bodily carbohydrate (glycogen) stores thereby limiting work or performance capacity.

A reduction of carbohydrate stores as well as of blood glucose levels can effectively be counteracted by oral supplementation of a readily available energy source such as carbohydrate having a fast absorption rate and good metabolic availability, i.e. which oxidises during exercise after oral intake.

It is these days general practice to ingest as much as possible carbohydrates in a liquid form when performing heavy physical exercises. There are however limitations and drawbacks to the supplementation of liquid carbohydrates. One of the limitations is the phenomenon that even though a high level of supplementation can be achieved, only part of the exogenous carbohydrates (in general less than 50 %) is oxidised during exercise. It is therefore desirable additionally to supply another energy source. Proteins are unsuitable for supplementation during exercise, since this gives rise to ammonia production and results in reduced performance. It would therefore appear indicated to supply fat as an additional energy source. Also, if a lot of carbohydrate is supplied during exercise, the fat metabolism becomes suppressed. This may lead to an over-use of endogenous carbohydrate, which may enhance depletion of the glycogen stores in an early part of the exercise event and thus to a decrease of performance. Accordingly, another reason why fat supplementation appears indicated is to stimulate fat oxidation and thus counter the mentioned side effect of carbohydrate supplementation.

However, fat supplementation to people involved in heavy physical work or exercise has several drawbacks.

The absorption of fat in the intestine is complicated, involving the lymph system and transformation to lipoproteins, and consequently slow. This has an immediate effect on the gastric emptying (GE) of the fat containing solutions as a feed back mechanism from the small intestines immediately regulates the gastric emptying to pace the absorption and as a result, limits the availability of fluid and energetic nutrients. It is the objective of the present invention to provide an energy source having the theoretical advantages of fat supplementation but which energy source is rapidly absorbed and does not delay gastric emptying, and which consequently maximises energy delivery and availability.

It has now been found that medium chain triglycerides (MCT) meet such requirements.

The term MCT as used herein relates to triesters of glycerine with fatty acids, particularly saturated fatty acids, having a chain length of from 6 to 12, preferably of from 8 to 10 carbon atoms. For sensoric and physiological reasons the triglycerides are predominantly triglycerides with caprylic and/or capric acid or mixtures thereof; preferably the MCT employed consist for at least 99 % by weight of caprylic acid triglyceride, capric acid triglyceride or mixtures thereof.

The invention accordingly provides energy supplements comprising carbohydrates and MCT in a weight ratio in the range of from 50:0.1 to 1:5, more preferably of from 10:0.5 to 5:1 of carbohydrate: MCT.

For the above-mentioned reason such energy supplements are preferably substantially free of protein. Any proteins present in the energy supplement of the invention will preferably not supply more than 10 %, more preferably less than 1 % of the total caloric amount of the supplement. Proteins suitable for use in the supplement of the invention are nutritionally acceptable proteins, in particular such suitable for incorporation in liquid supplements, such as milk proteins and protein hydrolysates including poly- and oligopeptides, whereby the term oligopeptides as used herein refers to peptides of at least 4, preferably at least 6 amino acids.

In typical compostions of the supplement according to the invention, the carbohydrates provide for 50 to 90 %, the MCT for 1 to 50 % and the protein for 0 to 10 % of the total energy supply of the supplement.

Carbohydrates suitable for use in the supplement of the invention include any digestible carbohydrate source such as starch, soluble starch, starch hydrolysates, maltodextrine, glucose polymers, glucose, fructose, lactose, maltose, dried glucosesirup and the like.

Particularly suitable carbohydrates from the physiological point of view, have a low dextrose equivalent (DE) index number, i.e. have a low content in glucose and maltose. Preferably said carbohydrates have a DE number of from 20 to 2, more preferably from 6 to 2.

However, where the composition is in drink form or in a (dry or liquid) concentrate form, which after dilution with water gives a drinkable form, part of the digestible carbohydrate source employed will be conveniently in digestible starch form, to stabilize the MCT For that purpose, the starch to be added may be in native or pre-cooked form or in physiological or chemical modifications thereof; for process technical reasons the starch is preferably in pre-cooked form or in the form of nutritionally acceptable, physiological and/or chemical modifications thereof. The amount of starch to be employed will conveniently be selected such, that it results in a physically acceptable composition, i.e. a composition having satisfactory shelf stability when in (liquid) concentrate or drinkable form, and which has - when in drink form - a viscosity suitable for drinking. It will be appreciated that this amount may accordingly, vary within wide ranges depending i.a. on the MCT content of the supplement, the presence of proteins and the desired energy supply of the drink per volume unit. The optimum amount of starch to be employed will i.a. depend on the starch type and can be determined empirically by standard tests by a person skilled in the field. Thus for example for the composition according to Example 2, hereinafter, which comprises 14.29 % by weight of MCT oil and which is intended for dilution of 30 g composition (supplement) in 200 ml of water, the amount of pre-cooked maize starch to be employed should conveniently lie within a range of from 30 to 100 % by weight of the MCT amount employed. Accordingly, in the supplement of Example 2, hereinafter, the amount of pre-cooked maize starch employed may vary from about 5 to 15 g starch per 100 g of supplement.

The supplements of the invention may comprise vitamins, minerals, trace elements, water, flavouring elements or other nutritional supplements such as amino acids, dipeptides and tripeptides. They may be in liquid form or solid form. Suitable examples of solid forms include energy bars or dry forms for dilution to drinkable forms. The supplement will preferably be in drink form, or in a dry or liquid concentrate form which after dilution with water, gives a drinkable form.

Supplements according to the invention in drink form or in a concentrate form for dilution with water will conveniently contain emulsifiers.

Where commercial available drinks containing a substantial amount of proteins are relatively unproblematic both in terms of production as in terms of stability of the drink, it is necessary to take special measures for the production of a drink according to the invention. Indeed the supplement of the invention is substantially free of proteins, and lacks therefore a component (such as protein) that can bind the MCT to form stabilised emulsions in water.

It is accordingly, an objective of the invention to provide a supplement containing primarily (hydrophilic) carbohydrates and (lipophilic) MCT as energy sources that is sufficiently stable, i.e does not lead to fat separation shortly after dilution with warm or cold water.

It has been found that drink forms having satisfactory stability, can be obtained by incorporating into the supplement - in addition to the starch referred to hereinbefore - lecithin and monoglyceride emulsifiers.

The lecithin emulsifier - to be employed in combination with monoglyceride - will conveniently have sufficient lipophilic properties to bind the MCT and sufficient hydrophilic properties to form emulsions having satisfactory stability. Suitable lecithins will, in general, have a hydrophilic-lipophilic balance (HLB) in the range of from 2 to 12.

Examples of suitable lecithin sources for use in the supplement of the present invention, are soja and egg yolk. In the process described in Example 2 hereinafter, the soy lecithin Natin E (from Natterman Phospholipid GmbH - Köln) gave good results.

The lecithin will conveniently be employed in an amount of from 5 to 15 % by weight of the amount of the MCT employed.

The monoglycerides to be employed as emulsifier will preferably be substantially free of di- or triglycerides. More particularly they will have a monoglyceride content of at least 99 %. Monoglycerides of sufficient purity can be obtained by vacuum distillation.

The amount of monoglyceride preferably contained in the supplements of the invention when intended for use a drink, will lie in the range of from 1 to 3 % by weight of the amount of MCT employed.

The content of electrolyte, if present, is preferably selected such that the drink form, or the drinkable form obtained after dilution with water, does not exceed the following amounts in mg/liter:

| chloride | 2000 mg/l |
| sodium | 2000 mg/l |
| potassium | 400 mg/l |
| calcium | 300 mg/l |
| magnesium | 200 mg/l |

In sport drinks, the electrolyte content should preferably not exceed the following levels in mg/liter.

| chloride | 1500 mg/l |
|---|---|
| sodium | 1100 mg/l |
| potassium | 225 mg/l |
| calcium | 225 mg/l |
| magnesium | 100 mg/l |

and lies preferably in the range of from

500 to 1500 mg/l for chloride
400 to 1100 mg/l for sodium
120 to 325 mg/l for potassium
45 to 225 mg/l for calcium
10 to 100 mg/l for magnesium.

The drink form or drinkable forms of energy supplements according to the invention, conveniently comprises from 5 to 100 g carbohydrate, from 1 to 40 g MCT and from 0 to 20 g protein per liter.

Any vitamins added to the supplement according to the invention are preferably in amounts according to national food legislation.

The supplements according to the invention may be obtained in conventional manner resp. as described in the examples hereinafter.

The drink powder according to the invention, is conveniently obtained by adding a mixture of lecithin and monoglyceride in the MCT to an aqueous solution of the digestible carbohydrates and lecithin and the mixture homogenised and dried.

Optional adjuvants of the composition such as minerals, vitamins, flavouring agents, amino acids, di- and tripeptides may be included into the aqueous or oily phase depending on whether they are hydrophilic or lipophilic resp. in conventional manner.

The oily and aqueous phase are preferably pre-heated. A suitable temperature is in the range of from 50° to 90°C.

The homogenisation may be effected in a manner known per se, e.g. by spray drying.

The thus obtained powder is preferably agglomerated. This can be done in a manner known per se. According to a preferred embodiment of the invention, the spray dried powder is agglomerated in a fluidised bed. For that purpose, the spray dried product is conveniently mixed with a nutritionally acceptable release agent such as tri-calcium phosphate prior to agglomeration. The amount of release agent to be added should be sufficient to avoid sticking of the product to the wall of the agglomerator, which will, in turn, depend on the particular composition of the supplement. The optimum amount of release agent to be employed may be determined by pilot tests. In general, satisfactory results are obtained when employing release agent in amounts of from 0.1 to 1.0 % by weight of the supplement.

The invention provides also the use of MCT to optimise the availability of fluid and energetic nutrients in men involved in heavy physical work or exercise and supplied with carbohydrates.

The following examples illustrate the invention. Percentages are by weight unless specified otherwise.

**Example 1: Supplement 1**

| Composition per liter solution | |
|---|---|
| Carbohydrate | 120 g |
| MCT | 25 g |
| Protein | -- |
| Sodium | 600 mg |
| Potassium | 150 mg |
| Chloride | 600 mg |
| Magnesium | 100 mg |
| Calcium | 100 mg |
| Vitamins | 150 mg. |

**Example 2 - Drink Powder**

**a) Composition**

| MCT oil | 14.29 % |
|---|---|
| Maltodextrin 20 DE | 70 % |
| Pre-cooked maize starch | 9.05 % |
| Monoglycerides | 0.28 % |
| Soy lecithin | 1.42 % |
| tri-Calcium phosphate | 0.50 % |
| Mineral premix | 2.43 % |
| Vanillin | 0.03 % |
| Water | 2.00 % |

100 g of the drink powder composition as given in Example 2 supply, 483 kcal; 149 kcal thereof (or 30.8 % of the energy supply) in the form of fat calories and 334 kcal (69.2 % of the energy supply) thereof in the form of carbohydrate calories.

**b) Production Process**

10 kg of demineralised water are heated to 40°C. 0.71 kg of soy lecithin are heated to 40°C and mixed with the pre-heated water in a colloid mixer (pre-mix I).

70 kg of maltodextrin 20 DE, 9.05 kg pre-cooked maize starch and 2.43 kg mineral premix are added to a planetary agitator containing 120 kg of demineralized water of 30°C and the mixture is stirred till all components are in solution (pre-mix II).

To 14.29 kg of MCT-oil heated to 70°C are carefully mixed with 0.71 kg of soy lecithin and 0.28 kg of mono-oglyceride till a clear melting is formed (pre-mix III).

Pre-mix I (at 40° C) is mixed into pre-mix II (at 30° C) and the mixture heated to 70° C (pre-mix IV).

Pre-mix III (at 70° C) is then quickly mixed into pre-mix IV (at 70° C) and the thus obtained mixture homogenised in a 2-step piston homogeniser at 170/30 bar.

The homogenisate is air dried in a spray drier with disk at an air inlet temperature of 155-165° C and air outlet temperature of 80-90° C. The dried product is then mixed in the spray drier with disk 0.5 kg of tri-calcium phosphate. The spray powder is then immediately thereafter agglomerated in a fluidised bed.

30 g of the thus obtained agglomerated product can readily be mixed and dissolved into 200 ml of cold or warm water. The drink remains stable - i.e. does not show fat separation - for more than 1 hour.

## Example 3 - Clinical Experiment

### a) Short description of the experiment

Nine healthy male volunteers (age $24 \pm 3$ years); body weight $73 \pm 5$ kg; height $183 \pm 6$ cm, mean $\pm$ standard deviation (SD) with no history of gastrointestinal disease and all familiar with gastric intubation and testing were asked to participate in 4 gastric emptying (GE) test. Gastric emptying tests were performed with the double sampling technique as described by George and Beckers, with phenol red as non-absorbable indicator. On every occasion they consumed a test meal consisting of Maldex[R] (DE 20) (Amylum) with different concentrations of MCT (Estasan[R] GT 8-60, 3 % C6, 50-65 % C8 and 35-45% C10) (Table 1). The order in which test meals were given was randomised and blind for the subjects.

### b) Daily protocol

Subjects arrived at the laboratory after an overnight fast where a nasogastric tube (Vygon silicone gastro-duodenal tube, Levin type, CH 14) was placed. The stomach was emptied and rinsed until no further residue was obtained and a recovery test was performed for control of the positioning of the tube. A bolus of 8 ml/kg body weight (average $585 \pm 42$ ml) of one of the test meals was administered via the tube, mixed with whatever gastric contents, and an initial sample was taken so the present gastric contents could be accounted for. Samples for the determination of GE were taken at 10 min. intervals for 90 min. following George's technique. Meal temperature was kept constant at 20°C. The experiments where performed in rest and subjects were sitting in a chair during the whole test. As there is no difference in gastric emptying between rest and exercise up to 70 % $VO_2$max, it was not considered necessary to conduct these experiments during exercise. Phenolred measurements and calculation of gastric contents and residual meal were performed according to Beckers. Gastric samples were centrifuged for 10 min. at 40000 g before analysing for phenolred to overcome the problem of cloudiness in the samples due to the MCT. Successive tests were at least 48 hours apart.

### c) Calculations and statistics

As a measure of GE rate $t_{1/2}$ was calculated from a simple exponential curve fit ($f=2^{-(t/t^{1/2})}$) using Biomedical Computer Programs, p-series (BMDPar).

For comparison of results ANOVA was performed.

### d) Results:

Table 2 represents the $t_{1/2}$-values for the individual subjects as well as the average and SD. The average gastric emptying curves as the percentage of the original bolus left in the stomach was depicted against time. ANOVA (one factor, repeated measure) of the data showed a highly significant difference in emptying rate (p-value = 0.0008). According to the Fisher PLSD test this difference is significant between dr1 and dr4, dr2 and dr4 and dr3 and dr4. (Table 3).

|  |  | Drink 1 | Drink 2 | Drink 3 | Drink 4 |
|---|---|---|---|---|---|
| MCT | gr/100 ml | 2.40 | 1.60 | 0.80 | 0.00 |
| Maldex 20 | gr/100 ml | 12.22 | 14.04 | 15.85 | 17.66 |
| Fat | Energy % | 30 | 20 | 10 | 0 |
| CHO | Energy % | 70 | 80 | 90 | 100 |
| NaCl | mmol/l | 20 | 20 | 20 | 20 |
| Osmolality | mosm/kg | 174 | 198 | 222 | 251 |
| Table 1 | | | | | |

| Subject | Drink 1 | Drink 2 | Drink 3 | Drink 4 |
|---|---|---|---|---|
| 1 | 11.3 | 21.9 | 24.5 | 29.0 |
| 2 | 22.9 | 27.3 | 35.1 | 26.4 |
| 3 | 25.5 | 24.9 | 30.3 | 25.6 |
| 4 | 25.7 | 25.1 | 36.8 | 49.7 |
| 5 | 25.0 | 29.8 | 19.9 | 45.8 |
| 6 | 19.7 | 20.2 | 20.0 | 34.9 |
| 7 | 22.2 | 31.0 | 30.1 | 38.8 |
| 8 | 19.7 | 19.4 | 19.9 | 30.1 |
| 9 | 37.0 | 16.3 | 30.5 | 42.3 |
| Average | 23.2 | 24.0 | 27.5 | 35.8 |
| St Dev | 6.8 | 4.9 | 6.6 | 8.8 |
| SEM | 2.3 | 1.6 | 2.2 | 2.9 |
| Table 2 | | | | |

One Factor ANOVA-Repeated Measures for $X_1 \ldots X_4$

| Source: | df: | Sum of Squares: | Mean Square: | F-test: | P value: |
|---|---|---|---|---|---|
| Between subjects | 8 | 621.532 | 77.692 | 1.157 | .3595 |
| Within subjects | 27 | 1812.46 | 67.128 | | |
| treatments | 3 | 901.743 | 300.581 | 7.921 | .0008 |
| residual | 24 | 910.717 | 37.947 | | |
| Total | 35 | 2433.992 | | | |

Reliability Estimates for— All treatments: .136    Single Treatment: .038

| Comparison: | Mean Diff.: | Fisher PLSD: | Scheffe F-test: | Dunnett t: |
|---|---|---|---|---|
| dr 1 vs. dr 2 | -.767 | 5.994 | .023 | .264 |
| dr 1 vs. dr 3 | -4.233 | 5.994 | .708 | 1.458 |
| dr 1 vs. dr 4 | -12.622 | 5.994* | 6.298* | 4.347 |
| dr 2 vs. dr 3 | -3.467 | 5.994 | .475 | 1.194 |
| dr 2 vs. dr 4 | -11.856 | 5.994* | 5.556* | 4.083 |

\* Significant at 95 %

| Comparison: | Mean Diff.: | Fisher PLSD: | Scheffe F-test: | Dunnett t: |
|---|---|---|---|---|
| dr 3 vs. dr 4 | -8.389 | 5.994* | 2.782 | 2.889 |

\* Significant at 95 %

## Table 3

## Claims

1. An energy supplement comprising carbohydrates and MCT in a weight ratio in the range of from 50:01 to 1:5 of carbohydrate: MCT.

2. The supplement according to Claim 1, wherein the weight ratio carbohydrate: MCT is in the range of from 10:0.5 to 5:1.

3. The supplement according to Claims 1 and 2, in which the carbohydrates provide for 50 to 99 %, the MCT for 1 to 50 % and the protein for 0 to 10 of the total energy supply of the supplement.

4. The supplement according to Claims 1 to 3 wherein the triglycerides are predominantly triglycerides with caprylic and/or capric acid or mixtures thereof.

5. The supplement according to Claim 4 wherein the MCT consist for at least 99 % by weight of caprylic acid triglyceride, capric acid triglyceride or mixtures thereof.

6. The supplement according to Claims 1 to 5, wherein the carbohydrates have a DE of from 20 to 2.

7. The supplement according to Claims 1 to 6, wherein the carbohydrates have a DE of from 6 to 2.

8. The supplement according to Claims 1 to 7 in solid form.

9. The supplement according to Claims 1 to 7, in drink form or which after dilution with water gives a drinkable form.

10. The supplement according to Claim 9 wherein part of the digestible carbohydrate source is in digestible starch form.

11. The supplement according to Claim 10, wherein the digestible starch is in native or precooked form or nutritionally acceptable physiological or chemical modifications thereof.

12. The supplement according to Claim 11, comprising a nutritionally acceptable lecithin emulsifier and a nutritionally acceptable monoglyceride.

13. The supplement according to Claim 12, wherein the lecithin emulsifier has a HLB in the range of from 2 to 12.

14. The supplement according to Claims 12 and 13, wherein the lecithin emulsifier is obtained from soja or egg yolk.

15. The supplement according to Claims 12 to 14, comprising lecithin emulsifier in an amount of from 5 to 15 % by weight of the MCT content.

16. The supplement according to Claims 12 to 15, wherein the monoglyceride is substantially free of di- and tri-glycerides.

17. The supplement according to Claim 16, wherein the monoglyceride material employed has a monoglyceride content of at least 99 % by weight.

18. The supplement according to Claims 10 to 17, wherein the monoglyceride content is 1 to 3 % by weight of the MCT content.

19. The supplement of Claim 18, comprising a nutritionally acceptable release agent.

20. The supplement of Claim 19, wherein the release agent is tricalciumphosphate.

21. The drink form or the drinkable form obtained after dilution with water according to Claims 9 to 20, in which the content of electrolyte does not exceed the following concentration:

| chloride | 2000 mg/l |
|---|---|
| sodium | 2000 mg/l |
| potassium | 400 mg/l |
| calcium | 300 mg/l |
| magnesium | 200 mg/l |

22. The drink form or drinkable form according to Claim 19 in which the content of electrolyte does not exceed the following concentration:

| chloride | 1500 mg/l |
|---|---|
| sodium | 1100 mg/l |
| potassium | 225 mg/l |
| calcium | 225 mg/l |
| magnesium | 100 mg/l |

23. The use of MCT to optimise the availability of fluid and energetic nutrients in men involved in heavy physical work or exercise and supplied with carbohydrates.

24. The use of MCT for the manufacture of a nutritional supplement for men involved in heavy physical work or exercise and supplied with carbohydrates to optimise the availability of fluid and energetic nutrients.

25. The method of optimising the availability of fluid and energetic nutrients in men involved in heavy physical work or exercise and supplied with carbohydrates, which comprises administering in association with the carbohydrates and effective amount of MCT.

26. The drink form or drinkable form according to Claims 9 to 22 comprising from 5 to 100 g carbohydrate, from 1 to 40 g MCT and from 0 to 20 g protein per liter drink.

## EUROPEAN SEARCH REPORT

**European Patent Office**

Application Number

EP 92 81 0753

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 322 027 (PROCTER & GAMBLE CO) <br> * page 33, example 7 * <br> --- | 1,2 | A 23 L 1/30 <br> A 23 L 2/38 <br> A 23 D 7/00 |
| A | WO-A-8 503 002 (BAXTER TRAVENOL LABORATORIES INC) <br> * claims 1-22 * <br> --- | 1,4 | |
| A | EP-A-0 071 995 (INTERMEDICAT GMBH) <br> * abstract; claim 1 * <br> ----- | 1,14 | |

TECHNICAL FIELDS
SEARCHED (Int. Cl.5)

A 23 L
A 23 D

The present search report has been drawn up for all claims

| Place of search | Date of completion of the search | Examiner |
|---|---|---|
| BERLIN | 16-12-1992 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)